(19) Europäisches Patentamt
European Patent Office
Office européen des brevets

(11) **EP 4 651 245 A1**

(12) **EUROPEAN PATENT APPLICATION**

(43) Date of publication:
**19.11.2025  Bulletin 2025/47**

(21) Application number: **24176333.3**

(22) Date of filing: **16.05.2024**

(51) International Patent Classification (IPC):
**H01M 8/04014** (2016.01)    **H01M 8/04111** (2016.01)
**H01M 8/04119** (2016.01)    **B60L 50/72** (2019.01)
**B60L 58/33** (2019.01)

(52) Cooperative Patent Classification (CPC):
**H01M 8/04111; B60L 50/72; B60L 58/33;**
**H01M 8/04014; H01M 8/04126; H01M 8/04141;**
H01M 2250/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **VOLVO TRUCK CORPORATION**
**405 08 Göteborg (SE)**

(72) Inventors:
• **NARASIMHA REDDY, Bala**
  **560043 BENGALURU (IN)**
• **PALANIVEL, Jeeva Rajasekar**
  **560103 KADUBESANAHALLI (IN)**
• **LÖWSTEDT, Carl**
  **439 36 ONSALA (SE)**

(74) Representative: **Ström & Gulliksson AB**
**P.O. Box 4188**
**203 13 Malmö (SE)**

(54) **FUEL CELL EXHAUST MANAGEMENT**

(57)    A fuel cell exhaust management device (30) for a fuel cell system (20) of a fuel cell electric vehicle (10) is disclosed. The fuel cell exhaust management device (30) comprises an intake water vapour portion (32) connected to a fuel cell stack (27) of the fuel cell system (20) and adapted to receive exhaust water vapour generated by the fuel cell stack (27); and a fuel cell exhaust conversion zone (34) connected to the intake water vapour portion (32) and arranged to enable absorption of heat via a heat exchange portion (36) from heated compressed air generated by a compressor (23) of the fuel cell system (20), said absorption of heat causing conversion of the exhaust water vapour into steam. The fuel cell exhaust conversion zone (34) is connected to an exhaust (40) of the fuel cell electric vehicle (10) for exhausting the steam to an external environment.

EP 4 651 245 A1

FIG. 2

**Description**

**TECHNICAL FIELD**

The disclosure relates generally to a fuel cell system. In particular aspects, the disclosure relates to fuel cell exhaust management. The disclosure can be applied to heavy-duty vehicles, such as trucks, buses, and construction equipment, among other vehicle types. Although the disclosure may be described with respect to a particular vehicle, the disclosure is not restricted to any particular vehicle.

**BACKGROUND**

A fuel cell electric vehicle, hereinafter abbreviated FCEV, is a vehicle operating by using a fuel cell stack that converts hydrogen into electricity to power an electric motor or charge a battery, ultimately for purposes of propelling the FCEV. Unlike traditional internal combustion engine vehicles that produce exhaust gases like carbon dioxide, nitrogen oxides, and particulate matter, FCEVs primarily emit water vapour as their exhaust gas. During operation, large quantities of exhaust gases, primarily water vapour, will inevitably be generated as a byproduct of the chemical reactions occurring within the fuel cell stack. The prior art lacks proper ways of managing these quantities of exhaust gases generated during operation of the FCEV.

The present disclosure therefore suggests improvements on how to manage fuel cell exhaust gases from an FCEV.

**SUMMARY**

One possible way of managing the exhaust gases suggested by the prior art involves discharging it as liquid water at the surface where the FCEV is travelling. However, this is not desired as water on the travelling surface may reduce traction between the wheels of the FCEV (or of other vehicles present on the road) and the travelling surface, which can lead to dangerous incidents such as slippage or aquaplaning. Moreover, the water may freeze on the road in subzero temperature environments, thus creating unwanted ice formations. Another approach suggested by the prior art for managing the exhaust gases involves storage thereof in an associated water tank arranged in the FCEV. This is also undesired for a plurality of reasons. Firstly, it is expensive to collect the ejected water in terms of water tank development, installation, discharge of water, and anti-corrosion treatment. Secondly, this causes problems for the FCEV relating to an undesired increase in the gross combined weight of the FCEV, which in turn reduces fuel efficiency and performance. The above-mentioned deficiencies of some possible ways of managing exhaust water vapour will especially be a subject of concern in the future as the number of FCEVs present on the road is likely to increase.

The present disclosure therefore seeks to address one or more of these issues.

According to a first aspect of the disclosure there is provided fuel cell exhaust management device for a fuel cell system of a fuel cell electric vehicle, the fuel cell exhaust management device comprising: an intake water vapour portion connected to a fuel cell stack of the fuel cell system and adapted to receive exhaust water vapour generated by the fuel cell stack; and a fuel cell exhaust conversion zone connected to the intake water vapour portion and arranged to enable absorption of heat via a heat exchange portion from heated compressed air generated by a compressor of the fuel cell system, said absorption of heat causing conversion of the exhaust water vapour into steam, wherein the fuel cell exhaust conversion zone is connected to an exhaust of the fuel cell electric vehicle for exhausting the steam to an external environment.

The first aspect of the disclosure may seek to manage fuel cell exhaust gases from an FCEV. Technical benefits may include efficient management of the exhaust water vapour generated by the fuel cell stack, prevention of slippage or aquaplaning, prevention of ice formations forming on road surfaces, elimination of the need for additional components to collect and store the liquid water, reducing the overall weight of the vehicle, which can enhance fuel efficiency and performance. In summary, the first aspect of the disclosure presents a fuel cell exhaust management device that may offer a safer and more efficient way of handling exhaust water vapour by converting it into steam and expelling it into the external environment, thereby preventing road hazards, reducing vehicle weight, and simplifying the vehicle's exhaust system.

Optionally in some examples, including in at least one preferred example, the fuel cell exhaust conversion zone is arranged adjacent to a charge air cooler of the fuel cell system, the charge air cooler being connected to an intake heated compressed air portion adapted to receive the heated compressed air. A technical benefit may include an adjacent arrangement of the conversion zone and the charge air cooler which allows for an increased efficiency in the heat exchange between the respective mediums flowing therein.

Optionally in some examples, including in at least one preferred example, the heated compressed air dissipates heat to the exhaust water vapour via the heat exchange portion. A technical benefit may include enhanced heat transfer capabilities, allowing for more effective conversion of exhaust water vapour into steam. Moreover, it can be controlled where the heat is being transferred which improves the overall control of the heat exchange procedure.

Optionally in some examples, including in at least one preferred example, the heat dissipated from the heated compressed air to the exhaust water vapour serves as an air cooling functionality of the charge air cooler. A technical benefit may include a reduced need of coolant since part of the heat from the compressed air is used to convert the water vapour into steam rather than being solely dissipated through conventional cooling means, effectively reducing the cooling demand on the charge air cooler.

Optionally in some examples, including in at least one preferred example, the air cooling functionality depends on inlet temperature requirements of cooled compressed air to a humidifier of the fuel cell system. A technical benefit may include an increased precision in temperature control may that may allow the fuel cell system to operate without overcooling or undercooling, thereby maintaining energy efficiency.

Optionally in some examples, including in at least one preferred example, the intake water vapour portion and the fuel cell exhaust conversion zone comprises piping. A technical benefit may include a convenient, relatively cheap, and effective way of enabling heat exchange which can be easy to incorporate into existing fuel cell systems and provide servicing.

Optionally in some examples, including in at least one preferred example, the piping of the fuel cell exhaust conversion zone extends alongside piping of the charge air cooler, the heat exchange portion being formed between the piping of the fuel cell exhaust conversion zone and the charge air cooler where they extend alongside one another. A technical benefit may include an efficient utilization of space and the facilitation of a direct heat exchange process.

Optionally in some examples, including in at least one preferred example, said absorption of heat depends on one or more of a: thermal conductivity of a material of the piping of the fuel cell exhaust conversion zone and the charge air cooler, a diameter of the piping of the fuel cell exhaust conversion zone and the charge air cooler, an insulation of the piping of the fuel cell exhaust conversion zone and the charge air cooler, a flow rate of respective medium inside the piping of the fuel cell exhaust conversion zone and the charge air cooler, a temperature difference between the exhaust water vapour and the heated compressed air, properties of the fuel cell system, and ambient conditions of the fuel cell system. A technical benefit may include a greater control in the heat absorption, ultimately allowing for an increased performance of the fuel cell exhaust management device.

Optionally in some examples, including in at least one preferred example, the intake water vapour portion comprises: a first intake portion between the fuel cell stack and a humidifier of the fuel cell system, a second intake portion between the humidifier and a turbine of the fuel cell system, and a third intake portion between the turbine and the fuel cell exhaust conversion zone. A technical benefit may include an efficient handling and transportation of water vapour through the system via the humidifier (so that it can maintain proper humidity levels), the turbine (so that energy can be harnessed), and finally to the fuel cell exhaust conversion zone for conversion. The segmented approach may allow for a more controlled and effective management of water vapour throughout the different stages of the fuel cell system.

Optionally in some examples, including in at least one preferred example, the exhaust is one or more tailpipes of the fuel cell electric vehicle. A technical benefit may include using existing components of the FCEV to expel the converted steam, further mitigating potential harm that could arise from releasing the water in its liquid form on road surfaces.

Optionally in some examples, including in at least one preferred example, the temperature of the exhaust water vapour is a maximum of 60 °C. A technical benefit may include providing a controlled temperature range that can ensure that the water vapour can efficiently be converted into steam without requiring excessive energy input. It may also help in maintaining a structural integrity and efficiency of the system components that are designed to operate within this temperature limit.

Optionally in some examples, including in at least one preferred example, the temperature of the heated compressed air is approximately between 140 °C and 180 °C. A technical benefit may include obtaining an accurate range for ensuring that the air carries sufficient thermal energy to facilitate the conversion of the exhaust water vapour into steam while also being within a manageable range for the materials and components used within the exhaust management device.

According to a second aspect of the disclosure there is provided a fuel cell system comprising the fuel cell exhaust management device of the first aspect.

According to a third aspect of the disclosure there is provided a fuel cell electric vehicle comprising fuel cell system of the second aspect.

According to a fourth aspect of the disclosure there is provided a method for managing fuel cell exhaust gases generated by a fuel cell system of a fuel cell electric vehicle. The method comprises receiving exhaust water vapour generated by a fuel cell stack of the fuel cell system; converting the exhaust water vapour into steam by enabling the exhaust water vapour to absorb heat from heated compressed air generated by a compressor of the fuel cell system; and exhausting the steam to an external environment.

The second, third and fourth aspects of the disclosure may seek to manage fuel cell exhaust gases from an FCEV. Technical benefits may include efficient management of the exhaust water vapour generated by the fuel cell stack, prevention of slippage or aquaplaning, prevention of ice formations forming on road surfaces, elimination of the need for additional components to collect and store the liquid water, reducing the overall weight of the vehicle, which can enhance fuel efficiency and performance. In summary, the first aspect of the disclosure presents a fuel cell exhaust management device that may offer a safer and more efficient way of handling exhaust water vapour by converting it into steam and expelling it into the external environment, thereby preventing road hazards, reducing vehicle weight, and simplifying the vehicle's exhaust system.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

## BRIEF DESCRIPTION OF THE DRAWINGS

Examples are described in more detail below with reference to the appended drawings.

FIG. 1 is an exemplary schematic illustration of a fuel cell electric vehicle.
FIG. 2 is an exemplary schematic illustration of a fuel cell system of a fuel cell electric vehicle.
FIG. 3 is an exemplary schematic illustration of a fuel cell exhaust management device of a fuel cell system.
FIG. 4 is a schematic diagram of an exemplary method for managing fuel cell exhaust gases.

## DETAILED DESCRIPTION

The detailed description set forth below provides information and examples of the disclosed technology with sufficient detail to enable those skilled in the art to practice the disclosure.

The present disclosure involves approaches for managing fuel cell exhaust gases by efficiently converting exhaust water vapour into steam that can be safely exhausted to the external environment. This approach may mitigate the risks associated with discharging liquid water onto the road, which can cause slippage or aquaplaning and may lead to dangerous incidents. It may also avoid the formation of ice on roads in cold climates, which can be particularly hazardous due to a reduced traction between vehicle wheels and road surfaces. Furthermore, by foregoing the need to collect and store exhaust water in a tank, the present disclosure may eliminate the associated costs and complications such as water tank development, installation, and maintenance. This may also prevent an undesired increase in the gross combined weight of the FCEV, which would otherwise reduce fuel efficiency and performance. Overall, the invention may provide a more effective and safer method of managing exhaust gases in FCEVs without the drawbacks of prior art methods, which is particularly beneficial as the prevalence of FCEVs on roads is expected to rise in line with emerging fuel cell technology.

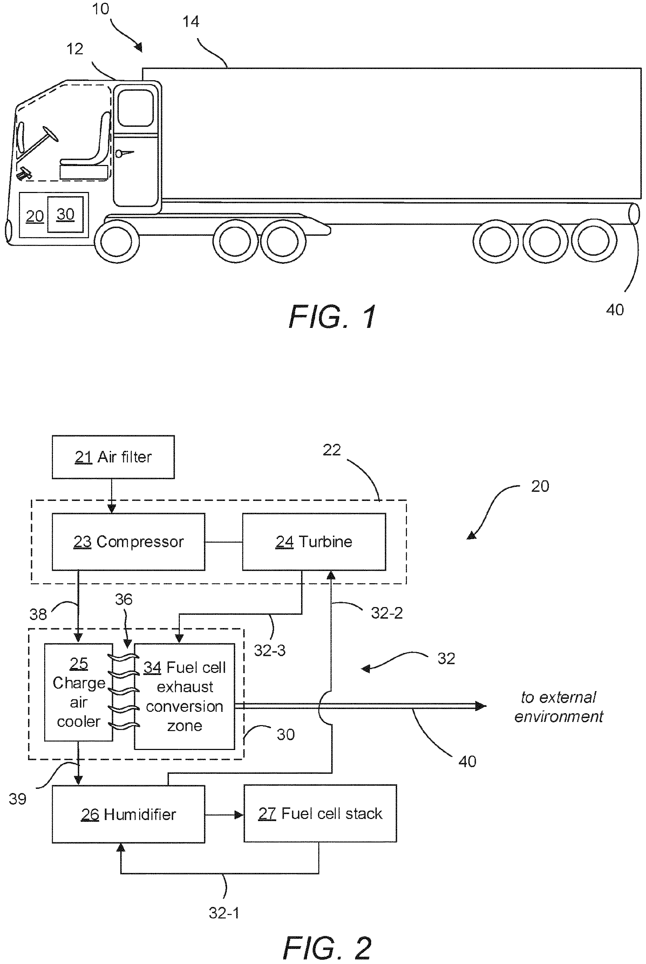

FIG. 1 is an exemplary schematic illustration of an FCEV 10. The FCEV 10 is illustrated as a heavy-duty vehicle, but other vehicle types may be used. The FCEV 10 comprises a tractor unit 12 which is arranged to tow a trailer unit 14. In other examples, other heavy-duty vehicles may be employed, e.g., trucks, buses, and construction equipment. The FCEV 10 comprises vehicle units and associated functionality as would be understood and expected by a skilled person, such as a powertrain, chassis, and various control systems.

The FCEV 10 comprises a fuel cell system 20 having a fuel cell stack with a plurality of fuel cells. The fuel cell system 20 is adapted to convert chemical energy stored in a fuel, typically hydrogen, as well as an oxidizing agent, typically oxygen or air, into electricity and heat as a byproduct through continuous electrochemical reactions. The generated electric current is used to power an electric motor for propulsion purposes, charge a vehicle battery, and/or power auxiliary vehicle systems of the FCEV 10. During the continuous electrochemical reactions, a reduction reaction occurs at the cathode where oxygen is supplied in combination with the protons and electrons from an external circuit. This reduction reaction generates water vapour. The overall reaction discussed above can be represented according to the following: $2H_2 + O_2 \rightarrow 2H_2O + electricity + heat$.

The present disclosure addresses how to manage the water vapour ($H_2O$). For hydrogen as the fuel to be consumed this is determined by the reaction above. Other fuels, such as methanol, ethanol, natural gas, propane, hydrocarbons, etc., involve their respective reactions generating water vapour as a byproduct. Purely for exemplary purposes, the following exemplary scenario describes how much water vapour that can be generated in an operation of a FCEV. The following assumptions are considered: A standard power rating for a fuel cell stack in a standard-size heavy duty FCEV may be 100 kW, a standard time of operation about one hour, and the fuel to be consumed is hydrogen having an approximate energy content of 286 kJ. The moles of hydrogen consumed may be calculated with the following formula:

$$\frac{Power * Time}{Energy\ content\ of\ hydrogen} = \frac{100kW * 1hour}{286kJ/mol} \approx 0.349\ moles$$

. With these assumptions, the volume of water vapour generated during one hour can be calculated as: *Volume of water vapour(liters) = Moles of hydrogen consumed*

$$* \, 22.4 \frac{liters}{mol} = \; 0.349 \, moles * 22.4 \frac{liters}{mol} = \; 7.81 \, liters$$

. Therefore, this particular standard-size heavy-duty FCEV with a 100 kW fuel cell stack, operating for one hour, would produce approximately 7.81 liters of water vapour as a byproduct of the electrochemical reactions. Clearly, longer operation times of the FCEV or higher power ratings of the fuel cell stack would result in a higher water vapour production.

The fuel cell system **20** comprises a fuel cell exhaust management device **30**. The fuel cell exhaust management device **30** is adapted to receive exhaust water vapour generated by the fuel cell stack of the fuel cell system **20**. The fuel cell exhaust management device **30** is then adapted to enable absorption of heat from heated compressed air generated by a compressor of the fuel cell system **20**. The absorption of heat causes the exhaust water vapour that was received from the fuel cell stack to be converted into steam. The fuel cell exhaust management device **30** is then adapted to exhaust the steam to an external environment. An *external environment* refers to the space outside of the FCEV **10,** which encompasses the surrounding atmosphere and environment where the vehicle is operated. It is essentially the open air into which the exhaust **40** of the FCEV **10,** such as a tailpipe or alternative exhaust component, releases steam or other byproducts of the operation of the fuel cell system **20**.

Exhausting the steam may be done via an exhaust **40** of the FCEV **10**. The exhaust **40** may be one or more of tailpipes, venting systems, diffuser devices, permeable membranes, and other gas conveying devices. If the exhaust **40** is already arranged in the FCEV **10,** the fuel cell exhaust management device **30** may comprise a steam conveying portion mounted between the fuel cell exhaust management device **30** and the exhaust **40** for intermittent delivery of the steam from the fuel cell exhaust management device **30** to the exhaust **40**. In other examples the exhaust **40** may be an auxiliary component mounted to the fuel cell exhaust management device **30** at a first end arranged to extend towards the external environment at a second end for transferring the steam from the fuel cell exhaust management device **30** directly to the external environment. In these examples the steam conveying portion is the exhaust **40**.

**FIG. 2** is a more detailed schematic illustration of the fuel cell system **20** according to some examples. The fuel cell exhaust management device **20** is arranged in the fuel cell system **20** and configured to function generally according to what was discussed in relation to **FIG. 1.** Before delving into details of the fuel cell exhaust management device **20,** the context in which it is designed to operate will now be explained with reference to the other components of the fuel cell system **20.**

The fuel cell system **20** comprises several interconnected components working together to optimize air intake, compression, cooling, humidity adjustment, and electrochemical reactions. At the forefront is an air filter **21,** responsible for cleansing incoming air to safeguard a fuel cell stack **27** from impurities. This filtered air is then directed to an electric turbocharger **22,** housing a compressor **23** and a turbine **24**. The electric turbo charger **22** is arranged to manage air supply. The compressor **23** pressurizes and compresses the filtered air, enhancing electrochemical reaction efficiency within the fuel cell stack **27**. Simultaneously, the turbine **24,** driven by exhaust gases from the fuel cell stack **27,** recovers energy to drive the compressor **23**. In the process of compression within the electric turbocharger **22,** the air experiences an increase in temperature. When air is compressed, its molecules are forced closer together, resulting in an increase in kinetic energy, which manifests as heat. This phenomenon may be described by Boyle's Law, which states that the pressure of a gas is inversely proportional to its volume when the temperature is held constant. Therefore, as the volume of air decreases during compression, its pressure and temperature increase.

Following compression, the heated compressed air passes through a charge air cooler **25** (often used interchangeably with intercooler in the context of fuel cell systems), where it undergoes cooling before entering the fuel cell stack **27**. Cooling is important for maintaining optimal operating conditions within the fuel cell stack **27**. This cooling process may involve a dedicated coolant loop circulating through a pump, heat exchanger, and coolant fluid. The coolant absorbs heat from the heated compressed air within the charge air cooler **25** and dissipates it through the heat exchanger, ensuring consistent air temperature for improved fuel cell performance.

Subsequently, the cooled and pressurized air proceeds via air conveying member **39** to a humidifier **26,** which adjusts its moisture content before entering the fuel cell stack **27**. Proper humidity levels is important for efficient operation, particularly for certain types of fuel cells like Solid Oxide Fuel Cells (SOFCs). The humidifier **27** balances the moisture content using water vapor produced both by the fuel cell stack important **27** and introduced from the air supply system (i.e. the electric turbocharger **22** via the charge air cooler **25),** consequently delivering properly humidified air to the fuel cell stack **27** where the electrochemical reactions discussed above occur, converting fuel and oxidant into electricity, water vapor, and heat.

The novel component of this disclosure is the fuel cell exhaust management device 30, which in depicted in **FIG. 2.**

The fuel cell exhaust management device **30** comprises an intake water vapour portion **32** which is connected to the fuel cell stack **27**. "Connected" shall in this context be understood as being fluidly connected to, or in fluid communication with, the fuel cell stack **27** for receiving exhausts therefrom. The intake water is adapted to receive exhaust water vapour generated by the fuel cell stack **27**. The exhaust water vapour is thereby delivered from the fuel cell stack **27** to a fuel cell exhaust conversion zone **34** comprised in the fuel cell exhaust management device **30.**

In this example the intake water vapour portion **32** comprises first **32-1,** second **32-2** and third **32-3** intake portions. The first intake portion **32-1** is arranged between the fuel cell stack **27** and the humidifier **26.** The second intake portion **32-2** is arranged between the humidifier **26** and the turbine **24.** The third intake portion **32-3** is arranged between the turbine **24** and the fuel cell exhaust conversion zone **34.** This particular arrangement of the intake water vapour portion **32** allows the humidifier **27** to balance the moisture content using water vapor produced both by the fuel cell stack **27.** Moreover, it supplies desired exhaust gases including the water vapour to drive the turbine **24,** and finally delivers the exhaust water vapour to the fuel cell exhaust conversion zone **34** for steam conversion.

The fuel cell exhaust conversion zone **34** is connected to the intake water vapour portion **32.** Similar to the above connection of the intake water vapour portion **32** and the fuel cell stack **27,** "connected" means fluidly connected or in fluid communication. The fuel cell exhaust conversion zone **34** is arranged to enable absorption of heat via a heat exchange portion **36.** This is done by heat transfer from the heated compressed air generated by the compressor **23.** Hence, the fuel cell exhaust conversion zone **34** is arranged to cause a transfer of heat from a hotter medium, i.e. the heated compressed air, to a cooler medium, i.e. the exhaust water vapour. This relation is generally caused in accordance with the second law of thermodynamics describing the direction of natural heat flow in a closed system.

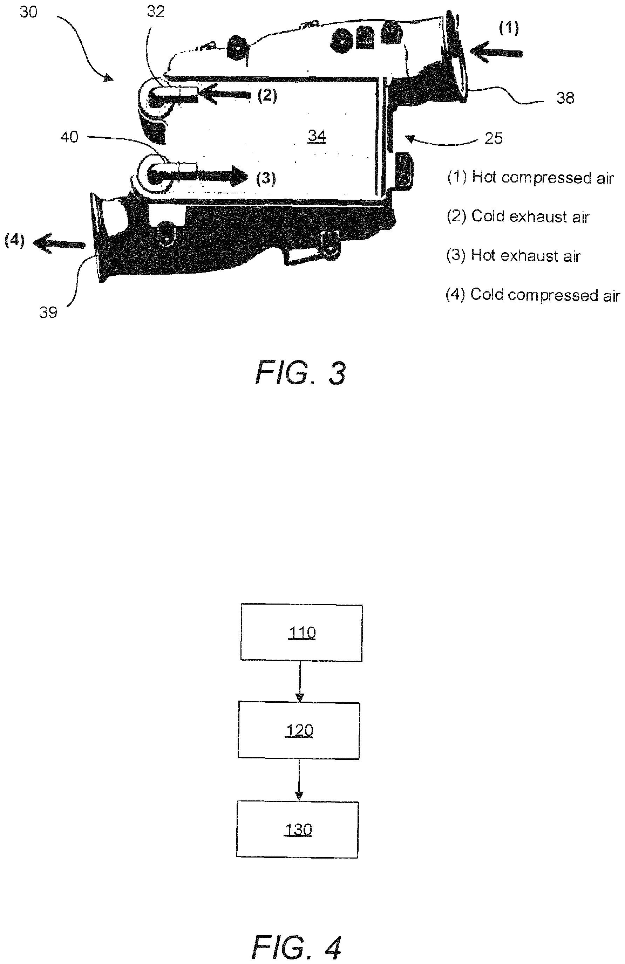

While the exact temperatures of the different mediums may vary, it shall be understood that the temperature of the heated compressed air is higher than the temperature of the exhaust water vapour for this to work. In some typical fuel cell system configurations, the temperature of the exhaust water vapour is a maximum of 60 °C, and the temperature of the heated compressed air is approximately between 140 °C and 180 °C. This may differ from one fuel cell configuration to another depending on factors including but not limited to operating conditions of the fuel cell system, efficiency of the fuel cell system, heat exchange mechanisms, fuel compositions, cooling systems, system design, or the like. Further details of this will be specified later on in this disclosure when referencing **FIG. 3.**

As seen in **FIG. 2,** the fuel cell heat exhaust conversion zone **34** may be arranged adjacent to the charge air cooler **25,** the charge air cooler **25** being connected to an intake heated compressed air portion **38** adapted to receive the heated compressed air from the compressor **23.** To this end, the charge air cooler **25** is arranged downstream the compressor **23,** and the fuel cell exhaust management device **30** downstream the fuel cell stack **27,** optionally intermittently via the humidifier **26** and the turbine **24** as is shown in **FIG. 2.** The heat exchange portion **36** is thereby formed in between the charge air cooler **25** and the fuel cell exhaust conversion zone **34** of the fuel cell exhaust management device **30.**

In some examples, the heated compressed air dissipates heat to the exhaust water vapour via the heat exchange portion **36.** This has two effects; firstly, it enables the exhaust water vapour to be heated such that it is eventually evaporated into steam; secondly, it enables the heated compressed air to be cooled. The first effect effectively provides a way of mitigating water spillage on roads and eliminates the need for an external water tank. The second effect prepares the compressed air for optimized temperature upon a subsequent entrance to the fuel cell stack **27** such as to avoid damages to the membrane of the fuel cell stack. The provisioning of the fuel cell exhaust management device **30** therefore serves dual purpose, both of which are beneficial to the safety and performance of the fuel cell system **20.**

In the examples above, the heat dissipated from the heated compressed air to the exhaust water vapour may serve as an air cooling functionality of the charge air cooler **25.** To this end, the fuel cell system **20** may not require as much cooling as traditional methods, since part of the heat from the compressed air is used to convert the water vapour into steam rather than being solely dissipated through conventional cooling means. This may reduce the cooling demand on the charge air cooler.

In the examples above, the air cooling functionality may depend on inlet temperature requirements of cooled compressed air to the humidifier **26.** As discussed above, the cooled and pressurized air proceeds to the humidifier **26,** which adjusts its moisture content before entering the fuel cell stack **27.** By controlling the air cooling functionality based on requirements of the cooled compressed air to the humidifier **26,** an efficiency of the fuel cell system **20** may be improved. This precision in temperature control may ensures that the fuel cell system **20** can operate without overcooling or undercooling, thereby maintaining energy efficiency. For example, if a maximum temperature allowed for the inlet air into the fuel cell stack **27** is set to 120 °C and the temperature of the heated compressed air is at 140 °C when it leaves the compressor **23,** the charge air cooler **25** does not require that much cooling to adjust the temperature of the heated compressed air for preparation before the fuel cell stack **27.** In another example, if the maximum temperature allowed for the inlet air into the fuel cell stack **27** is set to 80 °C and the temperature of the heated compressed air is at 140 °C when it leaves the compressor **23,** the charge air cooler **25** needs more cooling to adjust the temperature of the heated compressed air for preparation before the fuel cell stack **27.** In the first example, less coolant is therefore needed, which means that the air cooling functionality can be conveniently replaced by the heat exchange portion **36,** while in the second example higher cooling is needed which means that the heat exchange portion **36** can at least complement the coolant used by the charge air cooler **25.** Any other similar examples may be envisaged, ranging between a complete replacement to a minor complementing cooling property. Of course, this may also depend on properties of the respective designs of the charge air cooler **25** and the fuel cell exhaust management device **30.**

The fuel cell exhaust conversion zone **34** is finally connected to an exhaust **40** of the of the FCEV **10** for exhausting the steam to an external environment. This can generally be done according to what was discussed above with reference to **FIG. 1.**

With further reference to **FIG. 3,** the fuel cell exhaust management device **30** as discussed in **FIG. 2** is shown according to another example. The fuel cell exhaust management device **30** in this example comprises a system of piping that serve to transport different mediums - specifically, heated compressed air and water vapour. These piping are designed with considerations for size, shape, diameter, thermal conductivity, insulation materials, flow rates, and temperature differences, all of which can be tailored to the specific needs of the FCEV **10** and optimized for performance.

The fuel cell exhaust management device **30** has two main inputs: the first is an intake for heated compressed air **38** shown at (1) of **FIG. 3,** which is arranged downstream the compressor **23.** The second input is designed to intake water vapour **32** shown at (2) of **FIG. 3** as a byproduct of the fuel cell stack **27.** The water vapour is directed towards the fuel cell exhaust conversion zone **34.** Within this conversion zone **34,** a heat exchange process occurs. The heat from the hot medium, which is the heated compressed air, is transferred to the cold medium, the water vapour. This not only cools the air but also ensures that the water vapour is heated sufficiently to transform into steam. The design may be such that the piping of the exhaust conversion zone **34** is integrated with the piping of the charge air cooler **25,** allowing for a heat exchange portion **36** to be established where they run alongside each other. The piping may run alongside each other in a downstream direction of the fuel cell system **20,** e.g. extending from an input of the hot compressed air and cold exhaust air at (1) and (2) of **FIG. 3,** towards an output of the hot exhaust air and cold compressed air at (3) and (4) of **FIG. 3.** The piping may run substantially in parallel with respect to one another. The respective piping may be routed in any suitable way such that the heat of their respective mediums can be transferred therebetween.

In some examples, the fuel cell exhaust management device **30** may introduce a feedback loop system. The feedback loop system may comprise respective piping so as to redirect the outputted cold compressed air at (4) back to the hot compressed air input at (1), and to redirect the hot exhaust air (3) back to the cold exhaust air (2). The feedback loop system may be of use shall there be any issues with the system such that it for some reason fails to accurately exchange the heat. Another reason may be due to excessive temperature for either mediums (either too cold or too hot) which can cause an incomplete transfer of heat therebetween. The water vapour and compressed air may thus re-enter respective inputs at (1) and (2) for a chance to repeat the procedure.

The fuel cell exhaust management device **30** concludes with two outputs. The first output is the exhaust **40** of the FCEV **10** shown at (3) of **FIG. 3** as discussed herein through which the converted steam is safely expelled to an external environment for mitigating the risk of discharging liquid water onto the road. The second output is an air conveying member **39** shown at (4) of **FIG. 3** that leads to the humidifier **26,** where the now-cooled air is to be used in the fuel cell stack **27.**

The absorption of heat by the colder medium from the hotter medium may depend on a variety of different factors. The adaptability of the fuel cell exhaust management device **30** to such modifications underscores its versatility and the potential for customization in FCEV systems.

In some examples, the absorption depends on a thermal conductivity of a material of the piping. Materials with high thermal conductivity (e.g. copper or aluminum) are excellent at transferring heat and are typically used in situations where quick and efficient heat exchange is desired. On the other end of the spectrum, materials with lower thermal conductivity (e.g. stainless steel or certain plastic composites) might be used.

In some examples, the absorption depends on a diameter of the piping. For instance, larger diameter pipes may allow a greater volume of air or water vapour to flow through, potentially increasing the contact area for heat exchange. Conversely, smaller diameter piping could restrict flow but may enhance the rate of heat transfer if the medium is forced through at a higher velocity.

In some examples, the absorption depends on a length of the piping. Longer pipes provide more surface area for heat exchange, potentially leading to more efficient absorption of heat from one medium to another. However, if too long, the piping could result in unnecessary pressure drops or heat losses. Shorter piping, on the other hand, might offer less resistance and reduce heat loss but may also limit the time available for heat exchange.

In some examples, the absorption depends on an insulation of the piping. High-quality insulation can prevent heat loss to the environment, ensuring that the maximum amount of heat is transferred between the mediums within the piping. Different insulation materials and thicknesses can be used depending on the desired degree of thermal protection. Insulation materials may include fiberglass or polyurethane foam, etc.

In some examples, the absorption depends on a flow rate of the mediums inside the piping. Higher flow rates can lead to increased turbulence, enhancing the heat transfer rate. However, too high a flow rate might result in less effective heat absorption if the mediums do not have sufficient time to exchange heat. Conversely, a lower flow rate might allow for more thorough heat exchange but could result in lower overall system efficiency.

In some examples, the absorption depends on a temperature difference between the respective mediums inside the piping. A greater temperature differential can accelerate the heat absorption, as heat naturally flows from a hotter to a cooler medium. A smaller temperature difference might require more time or a larger surface area for the same level of heat absorption.

In some examples, the absorption depends on properties of the fuel cell system **20.** This may include the specific design of the fuel cell system **20,** the materials used, and the operating pressure and temperature conditions. Each of these properties can influence the rate at which heat is generated and needs to be absorbed by the system.

In some examples, the absorption depends on ambient conditions of the fuel cell system **20.** For example, the external temperature, humidity, and even the presence of wind can affect how the system absorbs and dissipates heat. In colder climates, for example, the ambient conditions might enhance the cooling of the piping, while in hotter environments, additional measures might be needed to ensure efficient heat absorption.

FIG. 4 is a schematic diagram of an exemplary method **100** for managing fuel cell exhaust gases generated by a fuel cell system of a fuel cell electric vehicle. The method **100** comprises receiving **110** exhaust water vapour generated by a fuel cell stack of the fuel cell system. The method **100** comprises converting **120** the exhaust water vapour into steam by enabling the exhaust water vapour to absorb heat from heated compressed air generated by a compressor of the fuel cell system. The method **100** comprises exhausting **130** the steam to an external environment.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

Example 1: A fuel cell exhaust management device (30) for a fuel cell system (20) of a fuel cell electric vehicle (10), the fuel cell exhaust management device (30) comprising: an intake water vapour portion (32) connected to a fuel cell stack (27) of the fuel cell system (20) and adapted to receive exhaust water vapour generated by the fuel cell stack (27); and a fuel cell exhaust conversion zone (34) connected to the intake water vapour portion (32) and arranged to enable absorption of heat via a heat exchange portion (36) from heated compressed air generated by a compressor (23) of the fuel cell system (20), said absorption of heat causing conversion of the exhaust water vapour into steam, wherein the fuel cell exhaust conversion zone (34) is connected to an exhaust (40) of the fuel cell electric vehicle (10) for exhausting the steam to an external environment.

Example 2: The fuel cell exhaust management device (30) of example 1, wherein the fuel cell exhaust conversion zone (34) is arranged adjacent to a charge air cooler (25) of the fuel cell system (20), the charge air cooler (25) being connected to an intake heated compressed air portion (38) adapted to receive the heated compressed air.

Example 3: The fuel cell exhaust management device (30) of example 2, wherein the heated compressed air dissipates heat to the exhaust water vapour via the heat exchange portion (36).

Example 4: The fuel cell exhaust management device (30) of example 3, wherein the heat dissipated from the heated compressed air to the exhaust water vapour serves as an air cooling functionality of the charge air cooler (25).

Example 5: The fuel cell exhaust management device (30) of example 4, wherein the air cooling functionality depends on inlet temperature requirements of cooled compressed air to a humidifier (26) of the fuel cell system (10).

Example 6: The fuel cell exhaust management device (30) of any of examples 1-5, wherein the intake water vapour portion (32) and the fuel cell exhaust conversion zone (34) comprises piping.

Example 7: The fuel cell exhaust management device (30) of example 6, wherein the piping of the fuel cell exhaust conversion zone (34) extends alongside piping of the charge air cooler (25), the heat exchange portion (36) being formed between the piping of the fuel cell exhaust conversion zone (34) and the charge air cooler (25) where they extend alongside one another.

Example 8: The fuel cell exhaust management device (30) of example 7, wherein the piping run alongside each other in a downstream direction of the fuel cell system (20).

Example 9: The fuel cell exhaust management device (30) of example 7 or 8, wherein the piping run in a meander-shaped pattern alongside each other.

Example 10: The fuel cell exhaust management device (30) of any of examples 6-9, further comprising a housing, wherein the housing is designed to accommodate the piping.

Example 11: The fuel cell exhaust management device (30) of example 10, wherein a charge air cooler (25) is integrated into the housing.

Example 12: The fuel cell exhaust management device (30) of any of examples 6-11, wherein the piping of the exhaust conversion zone (34) is integrated with the piping of the charge air cooler (25)

Example 13: The fuel cell exhaust management device (30) of any of examples 7-12, wherein said absorption of heat depends on one or more of a: thermal conductivity of a material of the piping of the fuel cell exhaust conversion zone (34) and the charge air cooler (25), a diameter of the piping of the fuel cell exhaust conversion zone (34) and the charge air cooler (25), an insulation of the piping of the fuel cell exhaust conversion zone (34) and the charge air cooler (25), a flow rate of respective medium inside the piping of the fuel cell exhaust conversion zone (34) and the charge air cooler (25), a temperature difference between the exhaust water vapour and the heated compressed air, properties of the fuel cell system (20), and ambient conditions of the fuel cell system (20).

Example 14: The fuel cell exhaust management device (30) of any of examples 1-13, wherein the intake water vapour portion (32) comprises: a first intake portion (32-1) between the fuel cell stack (27) and a humidifier (26) of the fuel cell system (20), a second intake portion (32-2) between the humidifier (26) and a turbine (24) of the fuel cell system (20), and a third intake portion (32-3) between the turbine (24) and the fuel cell exhaust conversion zone (34).

Example 15: The fuel cell exhaust management device (30) of any of example 1-14, wherein the exhaust (40) is one or more tailpipes of the fuel cell electric vehicle (10).

Example 16: The fuel cell exhaust management device (30) of any of examples 1-15, further comprising a steam conveying portion, the steam conveying portion either being the exhaust (40) or an intermittent member arranged between the fuel cell exhaust management device (30) and external environment.

Example 17: The fuel cell exhaust management device (30) of any of examples 1-16, wherein the temperature of the exhaust water vapour is a maximum of 60 °C.

Example 18: The fuel cell exhaust management device (30) of any of examples 1-17, wherein the temperature of the heated compressed air is approximately between 140 °C and 180 °C.

Example 19: A fuel cell system (20) comprising the fuel cell exhaust management device (30) of any of examples 1-18.

Example 20: A fuel cell electric vehicle (10) comprising the fuel cell system of example 19.

Example 21: A method (100) for managing fuel cell exhaust gases generated by a fuel cell system (20) of a fuel cell electric vehicle (10), the method (100) comprising: receiving (110) exhaust water vapour generated by a fuel cell stack (27) of the fuel cell system (20); converting (120) the exhaust water vapour into steam by enabling the exhaust water vapour to absorb heat from heated compressed air generated by a compressor (23) of the fuel cell system (20); and exhausting (130) the steam to an external environment.

**Claims**

1.  A fuel cell exhaust management device (30) for a fuel cell system (20) of a fuel cell electric vehicle (10), the fuel cell exhaust management device (30) comprising:

    an intake water vapour portion (32) connected to a fuel cell stack (27) of the fuel cell system (20) and adapted to receive exhaust water vapour generated by the fuel cell stack (27); and
    a fuel cell exhaust conversion zone (34) connected to the intake water vapour portion (32) and arranged to enable absorption of heat via a heat exchange portion (36) from heated compressed air generated by a compressor (23) of the fuel cell system (20), said absorption of heat causing conversion of the exhaust water vapour into steam, wherein the fuel cell exhaust conversion zone (34) is connected to an exhaust (40) of the fuel cell electric vehicle (10) for exhausting the steam to an external environment.

2.  The fuel cell exhaust management device (30) of claim 1, wherein the fuel cell exhaust conversion zone (34) is arranged adjacent to a charge air cooler (25) of the fuel cell system (20), the charge air cooler (25) being connected to an intake heated compressed air portion (38) adapted to receive the heated compressed air.

3. The fuel cell exhaust management device (30) of claim 2, wherein the heated compressed air dissipates heat to the exhaust water vapour via the heat exchange portion (36).

4. The fuel cell exhaust management device (30) of claim 3, wherein the heat dissipated from the heated compressed air to the exhaust water vapour serves as an air cooling functionality of the charge air cooler (25).

5. The fuel cell exhaust management device (30) of claim 4, wherein the air cooling functionality depends on inlet temperature requirements of cooled compressed air to a humidifier (26) of the fuel cell system (10).

6. The fuel cell exhaust management device (30) of any of claims 1-5, wherein the intake water vapour portion (32) and the fuel cell exhaust conversion zone (34) comprises piping.

7. The fuel cell exhaust management device (30) of claim 6, wherein the piping of the fuel cell exhaust conversion zone (34) extends alongside piping of the charge air cooler (25), the heat exchange portion (36) being formed between the piping of the fuel cell exhaust conversion zone (34) and the charge air cooler (25) where they extend alongside one another.

8. The fuel cell exhaust management device (30) of claim 7, wherein said absorption of heat depends on one or more of a:

   thermal conductivity of a material of the piping of the fuel cell exhaust conversion zone (34) and the charge air cooler (25),
   a diameter of the piping of the fuel cell exhaust conversion zone (34) and the charge air cooler (25),
   an insulation of the piping of the fuel cell exhaust conversion zone (34) and the charge air cooler (25),
   a flow rate of respective medium inside the piping of the fuel cell exhaust conversion zone (34) and the charge air cooler (25),
   a temperature difference between the exhaust water vapour and the heated compressed air,
   properties of the fuel cell system (20), and
   ambient conditions of the fuel cell system (20).

9. The fuel cell exhaust management device (30) of any of claims 1-8, wherein the intake water vapour portion (32) comprises:

   a first intake portion (32-1) between the fuel cell stack (27) and a humidifier (26) of the fuel cell system (20),
   a second intake portion (32-2) between the humidifier (26) and a turbine (24) of the fuel cell system (20), and
   a third intake portion (32-3) between the turbine (24) and the fuel cell exhaust conversion zone (34).

10. The fuel cell exhaust management device (30) of any of claims 1-9, wherein the exhaust (40) is one or more tailpipes of the fuel cell electric vehicle (10).

11. The fuel cell exhaust management device (30) of any of claims 1-10, wherein the temperature of the exhaust water vapour is a maximum of 60 °C.

12. The fuel cell exhaust management device (30) of any of claims 1-11, wherein the temperature of the heated compressed air is approximately between 140 °C and 180 °C.

13. A fuel cell system (20) comprising the fuel cell exhaust management device (30) of any of claims 1-12.

14. A fuel cell electric vehicle (10) comprising the fuel cell system of claim 13.

15. A method (100) for managing fuel cell exhaust gases generated by a fuel cell system (20) of a fuel cell electric vehicle (10), the method (100) comprising:

   receiving (110) exhaust water vapour generated by a fuel cell stack (27) of the fuel cell system (20);
   converting (120) the exhaust water vapour into steam by enabling the exhaust water vapour to absorb heat from heated compressed air generated by a compressor (23) of the fuel cell system (20); and

exhausting (130) the steam to an external environment.

FIG. 1

FIG. 2

30  32  (1)  38  25

(2)  34  40  (3)

(4)  39

(1) Hot compressed air

(2) Cold exhaust air

(3) Hot exhaust air

(4) Cold compressed air

*FIG. 3*

110

120

130

*FIG. 4*

Europäisches
Patentamt

European
Patent Office

Office européen
des brevets

# EUROPEAN SEARCH REPORT

**Application Number**

EP 24 17 6333

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2016/190611 A1 (GRUNDEI DANIEL [DE] ET AL) 30 June 2016 (2016-06-30)<br>* paragraphs [0019], [0020], [0026], [0027], [0038], [0039], [0045] *<br>* figures 1-3 *<br>* claims 1-15 *<br>----- | 1-15 | INV.<br>H01M8/04014<br>H01M8/04111<br>H01M8/04119<br>B60L50/72<br>B60L58/33 |
| Y | JP H06 28166 B2 (MITSUBISHI ELECTRIC CORP) 13 April 1994 (1994-04-13)<br>* abstract *<br>* page 2, column 2 *<br>* claim 1 *<br>----- | 1-15 | |
| A | US 2021/111421 A1 (MARTUSCELLI JOHN A [US] ET AL) 15 April 2021 (2021-04-15)<br>* claims 1-20 *<br>* paragraphs [0005], [0006], [0009], [0027] *<br>----- | 1-15 | |
| A | DE 10 2004 038633 A1 (GEN MOTORS CORP [US]) 17 March 2005 (2005-03-17)<br>* claims 1-23 *<br>* paragraphs [0016], [0017] *<br>----- | 1-15 | TECHNICAL FIELDS SEARCHED (IPC)<br><br>H01M<br>B60L |
| A | EP 4 085 185 B1 (CERES IP CO LTD [GB]) 23 August 2023 (2023-08-23)<br>* paragraph [0058] *<br>----- | 1-15 | |

The present search report has been drawn up for all claims

| Place of search | Date of completion of the search | Examiner |
|---|---|---|
| The Hague | 28 January 2025 | Reich, Claus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 6333

This annex lists the patent family members relating to the patent documents cited in  the above-mentioned European search report.
The members are as contained in the European Patent Office EDP file on
The European Patent Office is in no way liable for these particulars which are merely given for the purpose of information.

28-01-2025

| Patent document cited in search report | | Publication date | Patent family member(s) | | Publication date |
|---|---|---|---|---|---|
| US 2016190611 | A1 | 30-06-2016 | DE 102014227014 | A1 | 30-06-2016 |
| | | | US    2016190611 | A1 | 30-06-2016 |
| JP H0628166 | B2 | 13-04-1994 | JP      H0628166 | B2 | 13-04-1994 |
| | | | JP     H01166467 | A | 30-06-1989 |
| US 2021111421 | A1 | 15-04-2021 | CN     112652787 | A | 13-04-2021 |
| | | | DE 102020124754 | A1 | 15-04-2021 |
| | | | US    2021111421 | A1 | 15-04-2021 |
| DE 102004038633 | A1 | 17-03-2005 | DE 102004038633 | A1 | 17-03-2005 |
| | | | US    2005037250 | A1 | 17-02-2005 |
| | | | US    2011165479 | A1 | 07-07-2011 |
| EP 4085185 | B1 | 23-08-2023 | AU    2020418594 | A1 | 14-07-2022 |
| | | | CA      3164928 | A1 | 08-07-2021 |
| | | | CN     115298421 | A | 04-11-2022 |
| | | | EP      4085185 | A1 | 09-11-2022 |
| | | | ES      2963712 | T3 | 01-04-2024 |
| | | | GB      2604544 | A | 07-09-2022 |
| | | | JP    2023508477 | A | 02-03-2023 |
| | | | KR   20220123020 | A | 05-09-2022 |
| | | | US    2023030363 | A1 | 02-02-2023 |
| | | | WO    2021137041 | A1 | 08-07-2021 |

EPO FORM P0459

For more details about this annex : see Official Journal of the European Patent Office, No. 12/82